# EUROPEAN PATENT APPLICATION

(11) **EP 4 746 514 A1**
(43) Date of publication of application: **20.05.2026**
(21) Application number: 23945371.5
(22) Date of filing: 14.07.2023
(51) Int. Cl.: H04W 36/00

(54) **DATA FRAME TRANSMISSION METHOD, COMMUNICATION DEVICE AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/107573
(87) International publication number: WO 2025/015472

(57) **Abstract**

The embodiments of the present disclosure relate to a data frame transmission method, a communication device and a communication system. The data frame transmission method comprises: a sending end determining a first data frame, wherein the first data frame comprises first identification information, and the first identification information comprises whether the first data frame is a data frame repeatedly transmitted during the process of an STA switching from a first AP to a second AP; and sending the first data frame. Thus, data transmission between an STA and an AP which establishes the current communication connection with the STA is not interrupted, thereby meeting the requirements of an UHR for a transmission rate and the requirements of a low-delay service for a delay.

## Description

### TECHNICAL FIELD

The present disclosure relates to the field of communication technology, particularly to a data frame transmission method, a communication device and a communication system.

### BACKGROUND

With the continuous development of Wi-Fi technology, a next-generation Wi-Fi technology, i.e., ultra high reliability (UHR), has been proposed. In the UHR, a station (STA) may switch from an access point (AP) or access point multi-link device (AP MLD) to another AP (or AP MLD). To ensure that the data communication from an original AP (or AP MLD) is not disconnected, a data frame transmission method shall be provided to support the STA to switch from the original AP to a destination AP.

### SUMMARY

Embodiments of the present disclosure provide a data frame transmission method, a communication device and a communication system so as to ensure that a data communication is not disconnected during a switching process of an STA.

In a first aspect, an embodiment of the present disclosure provides a data frame transmission method, including:
determining, by a transmitter, a first data frame, wherein the first data frame includes first indication information, and the first indication information includes whether or not the first data frame is a data frame retransmitted during a process of an STA switching from a first AP to a second AP; and
sending the first data frame.

In a second aspect, an embodiment of the present disclosure provides a data frame transmission method, including:
receiving, by a receiver, a first data frame, wherein the first data frame includes first indication information, and the first indication information identifies whether or not the first data frame is a data frame transmitted to a second AP during a process of an STA switching from a first AP to the second AP.

In a third aspect, an embodiment of the present disclosure provides a communication device, which is a transmitter, and includes:
a determining module, configured to determine a first data frame, wherein the first data frame includes first indication information, and the first indication information identifies whether or not the first data frame is a data frame retransmitted during a process of an STA switching from a first AP to a second AP; and
a sending module, configured to send the first data frame.

In a fourth aspect, an embodiment of the present disclosure provides a communication device, which is a receiver, and includes:
a receiving module, configured to receive a first data frame, wherein the first data frame includes first indication information, and the first indication information identifies whether or not the first data frame is a data frame transmitted to a second AP during a process of an STA switching from a first AP to the second AP.

In a fifth aspect, an embodiment of the present disclosure provides a communication device, which is a transmitter, and includes:
one or more processors,
wherein the communication device is configured to perform the data frame transmission method according to the first aspect of the embodiments of the present disclosure.

In a sixth aspect, an embodiment of the present disclosure provides a communication device, which is a receiver, and includes:
one or more processors;
wherein the communication device is configured to perform the data frame transmission method according to the second aspect of the embodiments of the present disclosure.

In a seventh aspect, an embodiment of the present disclosure provides a communication system including a first communication device and a second communication device, wherein the first communication device is a transmitter and configured to perform an optional implementation in the first aspect, and the second communication device is a receiver and configured to perform an optional implementation in the second aspect.

In an eighth aspect, an embodiment of the present disclosure provides a storage medium having instructions stored thereon that, when executed on a communication device, cause the communication device to perform an optional implementation in the first aspect, the second aspect, the third aspect and the fourth aspect.

Additional aspects and advantages of the embodiments of the present disclosure will be partially provided in the following description, and will partially become apparent from the following description or be learned through practice of the present disclosure.

### BRIEF DESCRIPTION OF THE DRAWINGS

To more clearly illustrate the technical solutions in the embodiments of the present disclosure, the accompanying drawings for describing the embodiments are introduced below. The following drawings merely represent some embodiments of the present disclosure and do not impose specific limitations on the protection scope of the present disclosure.
FIG. 1 is a schematic architectural diagram of a communication system according to an embodiment of the present disclosure;
FIG. 2 is a first schematic interaction diagram of a data frame transmission method according to an embodiment of the present disclosure;
FIG. 3 is a first schematic flow diagram of a data frame transmission method according to an embodiment of the present disclosure;
FIG. 4A is a second schematic flow diagram of a data frame transmission method according to an embodiment of the present disclosure;
FIG. 4B is a third schematic flow diagram of a data frame transmission method according to an embodiment of the present disclosure;
FIG. 4C is a fourth schematic flow diagram of a data frame transmission method according to an embodiment of the present disclosure;
FIG. 5A is a second schematic interaction diagram of a data frame transmission method according to an embodiment of the present disclosure;
FIG. 5B is a third schematic interaction diagram of a data frame transmission method according to an embodiment of the present disclosure;
FIG. 5C is a fourth schematic interaction diagram of a data frame transmission method according to an embodiment of the present disclosure;
FIG. 6 is a first schematic structural diagram of a communication device according to an embodiment of the present disclosure;
FIG. 7 is a second schematic structural diagram of a communication device according to an embodiment of the present disclosure;
FIG. 8 is a schematic structural diagram of a terminal according to an embodiment of the present disclosure;
FIG. 9 is a schematic structural diagram of a chip according to an embodiment of the present disclosure.

### DETAILED DESCRIPTION

Embodiments of the present disclosure provide a data frame transmission method, a communication device and a communication system.

In a first aspect, an embodiment of the present disclosure provides a data frame transmission method, including:
determining, by a transmitter, a first data frame, wherein the first data frame includes first indication information, and the first indication information includes whether or not the first data frame is a data frame retransmitted during a process of an STA switching from a first AP to a second AP; and
sending the first data frame.

In the above embodiments, the transmitter determines and sends the first data frame which carries the first indication information. The first indication information identifies whether or not the first data frame is the data frame retransmitted during the process of the STA switching from the first AP to the second AP. Thus, during the communication between the STA and a switched AP, the receiver of the first data frame can determine whether or not the first data frame is the data frame retransmitted during the process of the STA switching from the first AP to the second AP, and performs subsequent transmission based on this determination, so that the data transmission between the STA and the AP with which the STA establishes a current communication link is not disconnected, which satisfies the transmission rate requirements of UHR and the latency requirements of a low-latency service.

In conjunction with some embodiments of the first aspect, in some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

In the above embodiments, the first indication bit is provided with a numerical value, the first indication bit is set to the first parameter value to identify that the first data frame is the data frame retransmitted during the process of the STA switching from the first AP to the second AP, and the first indication bit is set to a second parameter value to identify that the first data frame is not the data frame retransmitted during the process of the STA switching from the first AP to the second AP, which can reduce a transmission data volume for the first data frame during the transmission thereof.

In conjunction with some embodiments of the first aspect, in some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

In the above embodiments, the first data frame carries the first indication information, and the first indication information includes the second indication bit, the third indication bit, and the fourth indication bit; the second indication bit identifies the MAC address information of the first AP or the first AP MLD to which the first AP affiliates; the third indication bit identifies the MAC address information, on the target link, of the STA or the non-AP MLD to which the STA affiliates, and the target link is the transmission link between the STA and the second AP; and the fourth indication bit identifies the MAC address information, on the target link, of the second AP or the second AP MLD to which the second AP affiliates, so that the receiver of the first data frame can determine, based on the details identified by the second, third, and fourth indication bits, whether or not the first data frame is the data frame retransmitted during the process of the STA switching from the first AP to the second AP, and moreover, when the first data frame is the data frame retransmitted during the process of the STA switching from the first AP to the second AP, the receiver can further determine whether the first data frame is the data frame retransmitted during the process of the STA switching from the first AP to the second AP within the AP MLD or between AP MLDs.

In conjunction with some embodiments of the first aspect, in some embodiments, the first data frame is the data frame retransmitted during the process of the STA switching from the first AP to the second AP, and the first data frame employs a same SNS at the first AP and the second AP.

In the above embodiments, the same SNS is employed to identify that the first data frame is the data frame retransmitted during the process of the STA switching from the first AP to the second AP, so that the receiver of the first data frame can learn whether or not the currently received data frame is the data frame retransmitted during the switching process from the first AP to the second AP. Therefore, upon determining that the first data frame is the data frame retransmitted during the process of the STA switching from the first AP to the second AP, the receiver performs subsequent transmission based on this determination, so that the data transmission between the STA and the AP with which the STA establishes a current communication link is not disconnected, which satisfies the transmission rate requirements of UHR and the latency requirements of a low-latency service.

In conjunction with some embodiments of the first aspect, in some embodiments, the first data frame is an uplink data frame, and the transmitter of the first data frame includes the STA or a non-AP MLD to which the STA affiliates; or
the first data frame is a downlink data frame, and the transmitter of the first data frame includes the second AP or a second AP MLD to which the second AP affiliates.

In conjunction with some embodiments of the first aspect, in some embodiments, a receiver determines, based on at least one of the SNS of the first data frame or the first indication information, whether or not the first data frame is the data frame retransmitted during the process of the STA switching from the first AP to the second AP.

In the above embodiments, the receiver may determine whether or not the first data frame is the data frame retransmitted during the process of the STA switching from the first AP to the second AP based on at least one of the SNS of the first data frame or the first indication information, and then performs subsequent transmission based on this determination, so that the data transmission between the STA and the AP with which the STA establishes a current communication link is not disconnected, which satisfies the transmission rate requirements of UHR and the latency requirements of a low-latency service.

In conjunction with some embodiments of the first aspect, in some embodiments, determining, by the receiver, that the first data frame is the data frame retransmitted during the process of the STA switching from the first AP to the second AP includes at least one of:
determining, by the receiver, that the first data frame is the data frame retransmitted during the process of the STA switching from the first AP to the second AP by determining that the first data frame employs the same SNS at the first AP and the second AP;
determining, by the receiver, that the first data frame is the data frame retransmitted during the process of the STA switching from the first AP to the second AP by determining that the first indication bit is set to the first parameter value; or
determining, by the receiver, that the first data frame is the data frame retransmitted during the process of the STA switching from the first AP to the second AP by determining that the second indication bit identifies the MAC address information of the first AP or the first AP MLD, the third indication bit identifies the MAC address information, on the target link, of the STA or the non-AP MLD, and the fourth indication bit identifies the MAC address information, on the target link, of the second AP or the second AP MLD.

In the above embodiments, the receiver may determine the first data frame is the data frame retransmitted during the process of the STA switching from the first AP to the second AP or not specifically based on at least one of the SNS of the first data frame or details within the first indication information, and then performs subsequent transmission based on this determination, so that the data transmission between the STA and the AP with which the STA establishes a current communication link is not disconnected, which satisfies the transmission rate requirements of UHR and the latency requirements of a low-latency service.

In conjunction with some embodiments of the first aspect, in some embodiments, if the receiver determines that the first data frame is the data frame retransmitted during the process of the STA switching from the first AP to the second AP, and the first AP MLD is the same as the second AP MLD, the receiver determines that the first data frame is a data frame retransmitted during the process of the STA switching from the first AP to the second AP within an AP MLD; and
if the receiver determines that the first data frame is the data frame retransmitted during the process of the STA switching from the first AP to the second AP, and the first AP MLD is different from the second AP MLD, the receiver determines that the first data frame is a data frame retransmitted during the process of the STA switching from the first AP to the second AP between AP MLDs.

In the above embodiments, the receiver can determine whether the first data frame is the data frame retransmitted during the process of the STA switching from the first AP to the second AP within an AP MLD or the data frame retransmitted during the process of the STA switching from the first AP to the second AP between AP MLDs specifically based on whether or not the first AP MLD to which the first AP affiliates and the second AP MLD to which the second AP affiliates are the same, and then performs subsequent transmission based on this determination, so that the data transmission between the STA and the AP with which the STA establishes a current communication link is not disconnected, which satisfies the transmission rate requirements of UHR and the latency requirements of a low-latency service.

In a second aspect, an embodiment of the present disclosure provides a data frame transmission method, including:
receiving, by a receiver, a first data frame, wherein the first data frame includes first indication information, and the first indication information identifies whether or not the first data frame is a data frame transmitted to a second AP during a process of an STA switching from a first AP to the second AP.

In the above embodiments, during the communication between the STA and a switched AP, the receiver of the first data frame can determine whether or not the first data frame is the data frame retransmitted during the process of the STA switching from the first AP to the second AP, and performs subsequent transmission based on this determination, so that the data transmission between the STA and the AP with which the STA establishes a current communication link is not disconnected, which satisfies the transmission rate requirements of UHR and the latency requirements of a low-latency service.

In conjunction with some embodiments of the second aspect, in some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

In conjunction with some embodiments of the second aspect, in some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

In conjunction with some embodiments of the second aspect, in some embodiments, the first data frame is the data frame retransmitted during the process of the STA switching from the first AP to the second AP, and the first data frame employs a same SNS at the first AP and the second AP.

In conjunction with some embodiments of the second aspect, in some embodiments, the first data frame is an uplink data frame, and the receiver of the first data frame includes the second AP or a second AP MLD to which the second AP affiliates; or
the first data frame is a downlink data frame, and the receiver of the first data frame includes the STA or a non-AP MLD to which the STA affiliates.

In conjunction with some embodiments of the second aspect, in some embodiments, the receiver determines, based on at least one of the SNS of the first data frame or the first indication information, whether or not the first data frame is the data frame retransmitted during the process of the STA switching from the first AP to the second AP.

In conjunction with some embodiments of the second aspect, in some embodiments, determining, by the receiver, that the first data frame is the data frame retransmitted during the process of the STA switching from the first AP to the second AP includes at least one of:
determining, by the receiver, that the first data frame is the data frame retransmitted during the process of the STA switching from the first AP to the second AP by determining that the first data frame employs the same SNS at the first AP and the second AP;
determining, by the receiver, that the first data frame is the data frame retransmitted during the process of the STA switching from the first AP to the second AP by determining that the first indication bit is set to the first parameter value; or
determining, by the receiver, that the first data frame is the data frame retransmitted during the process of the STA switching from the first AP to the second AP by determining that the second indication bit identifies the MAC address information of the first AP or the first AP MLD, the third indication bit identifies the MAC address information, on the target link, of the STA or the non-AP MLD, and the fourth indication bit identifies the MAC address information, on the target link, of the second AP or the second AP MLD.

In conjunction with some embodiments of the second aspect, in some embodiments,
if it determines that the first data frame is the data frame retransmitted during the process of the STA switching from the first AP to the second AP, and the first AP MLD is the same as the second AP MLD, it determines that the first data frame is a data frame retransmitted during the process of the STA switching from the first AP to the second AP within an AP MLD; and
if it determines that the first data frame is the data frame retransmitted during the process of the STA switching from the first AP to the second AP, and the first AP MLD is different from the second AP MLD, it determines that the first data frame is a data frame retransmitted during the process of the STA switching from the first AP to the second AP between AP MLDs.

In a third aspect, an embodiment of the present disclosure further provides a communication device, which is a transmitter and includes at least one of a determining module or a sending module, and the communication device is configured to perform an optional embodiment of the first aspect.

In a fourth aspect, an embodiment of the present disclosure further provides a communication device, which is a receiver and includes at least one of a receiving module, and the communication device is configured to perform an optional embodiment of the second aspect.

In a fifth aspect, an embodiment of the present disclosure further provides a communication device, including:
one or more processors,
wherein the communication device is configured to perform an optional implementation of the first aspect.

In a sixth aspect, an embodiment of the present disclosure further provides a communication device, including:
one or more processors,
wherein the communication device is configured to perform an optional implementation of the second aspect.

In a seventh aspect, an embodiment of the present disclosure further provides a communication system including a first communication device and a second communication device, the first communication device is a transmitter configured to perform an optional implementation of the first aspect, and the second communication device is a receiver configured to perform an optional implementation of the second aspect.

In an eighth aspect, an embodiment of the present disclosure further provides a storage medium having instructions stored thereon that, when executed on a communication device, cause the communication device to perform an optional implementation of the first, second, third, and fourth aspects.

In a ninth aspect, an embodiment of the present disclosure provides a program product that, when executed on a communication device, causes the communication device to perform the method described in an optional implementation of the first, second, third, and fourth aspects.

In a tenth aspect, an embodiment of the present disclosure provides a computer program that, when executed on a computer, causes the computer to perform the method described in an optional embodiment of the first, second, third, and fourth aspects.

In an eleventh aspect, an embodiment of the present disclosure provides a chip or chip system. The chip or chip system includes a processing circuit configured to perform the method described in an optional implementation of the first, second, third, and fourth aspects.

It can be understood that the above transmitter, receiver, communication system, storage medium, program product, computer program, chip, or chip system are all employed to execute the communication method provided by the embodiments of the present disclosure. Consequently, the beneficial effects achieved thereby may refer to the beneficial effects in the corresponding method, which are not repeated herein.

The embodiments of the present disclosure propose a communication method, a transmitter, a receiver, and a communication system. In some embodiments, the terms such as communication method, signal sending method, and wireless frame sending method may be used interchangeably, and the terms such as information processing system and communication system may be used interchangeably.

The embodiments of the present disclosure are not exhaustive but merely illustrate some embodiments, which do not constitute specific limitations on the protection scope of the present disclosure. If there is no contradiction, each step within an embodiment may be implemented as an independent embodiment, and various steps therein may be arbitrarily combined. For example, a solution in an embodiment with some steps removed may be implemented as an independent embodiment, and steps in an embodiment may be arbitrarily exchanged in sequence. Furthermore, optional implementations in an embodiment may be arbitrarily combined. Moreover, various embodiments may be arbitrarily combined. For example, part or all steps from different embodiments may be arbitrarily combined, and an embodiment may be arbitrarily combined with an optional implementation from another embodiment.

In the embodiments of the present disclosure, unless otherwise specified or logically conflicting, the terms and/or descriptions remain consistent across the embodiments and may be cross-referenced. Technical features from different embodiments may be combined to form a new embodiment based on inherent logical relationships thereof.

The term employed in the embodiments of the present disclosure serves solely to describe specific embodiments and shall not be construed as limiting the scope of the present disclosure.

In the embodiments of the present disclosure, "a plurality of" denotes two or more.

In some embodiments, terms such as "at least one of", "one or more", "a plurality of", and "multiple" may be used interchangeably.

In some embodiments, depending on the content, the expressions such as "at least one of A or B", "A and/or B", "A in one case, B in another case", or "in response to a case A, in response to another case B" may include the following technical solutions: in some embodiments, A (A is executed independently of B); in some embodiments, B (B is executed independently of A); in some embodiments, selection from A and B to be executed (A and B are selectively executed); and in some embodiments, A and B (both A and B are executed). When there are more elements such as A, B, C, etc., similar principle is applied.

In some embodiments, depending on the context, the expression such as "A or B" may include the following technical solutions: in some embodiments, A (A is executed independently of B); in some embodiments, B (B is executed independently of A); and in some embodiments, selection from A and B to be executed (A and B are selectively executed). When there are more elements such as A, B, C, etc., similar principle is applied.

In the embodiments of the present disclosure, the prefixes such as "first", "second" serve solely to distinguish different described objects, and do not impose any restrictions on the position, sequence, priority, quantity, or content of a described object. The statements regarding the described objects refer to the description in the context of claims or embodiments, and the prefixes used should not be construed as imposing additional limitations. For example, when the described object is "field", the ordinal numbers preceding "field" in "first field" and "second field" do not restrict the positional relationship or sequence between the fields, and "first" and "second" do not limit whether the fields they define reside within the same message, nor do they limit the chronological order between "first field" and "second field". For another example, when the described object is "level", the ordinal numbers preceding "level" in "first level" and "second level" do not restrict the priority between levels. For further another example, the quantity of the described objects is not limited by the ordinal number, and it may be one or more. Taking "first device" as an example, the quantity of "devices" may be one or more. Furthermore, the objects modified by different prefixes may be the same or different. For example, when the described object is "device", "first device" and "second device" may be the same device or different devices, and the types thereof may be the same or different. For another example, when the described object is "information", "first information" and "second information" may be the same information or different information, and the contents thereof may be the same or different.

In some embodiments, the expressions such as "including A", "containing A", "for indicating A", and "carrying A" may be interpreted as either directly carrying A or indirectly indicating A.

In some embodiments, the terms such as "in response to...", "in response to determining...", "in the case of...", "at the time of...", "when...", and "if..." may be used interchangeably.

In some embodiments, the terms such as "greater than", "greater than or equal to", "not less than", "more than", "more than or equal to", "not fewer than", "higher than", "higher than or equal to", "not lower than" and "above" may be used interchangeably, and the terms such as "less than", "less than or equal to", "not greater than", "fewer than", "fewer than or equal to", "not more than", "lower than, "lower than or equal to", "not higher than" and "below" may be used interchangeably.

In some embodiments, devices and apparatus may be interpreted as either physical or virtual entities, and the names thereof are not limited to that recited in the embodiments. In some instances, they may also be understood as "equipment", "device", "circuit", "network element", "node", "function", "unit", "section", "system", "network", "chip", "chip system", "entity", "body" or the like.

In some embodiments, a "network" may be interpreted as devices within a network, such as access network devices, core network devices, etc.

In some embodiments, the acquisition of data, information, etc., may comply with the laws and regulations of the local country.

In some embodiments, data, information, etc., may be acquired after the agreement of user.

Furthermore, each element, row, or column in a table in an embodiment of the present disclosure may be implemented as an independent embodiment, and a combination of any element, any row, or any column may also be implemented as an independent embodiment.

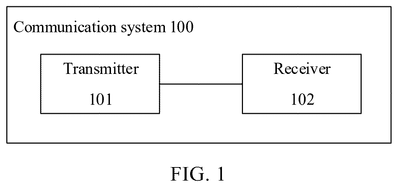

FIG. 1 is a schematic architectural diagram of a communication system according to an embodiment of the present disclosure.

As shown in FIG. 1, the communication system 100 includes a transmitter 101 and a receiver 102 for data transmission.

In some embodiments, the transmitter and the receiver may be determined according to practical requirements. For example, when data transmission occurs between a station (STA) and an access point (AP), the transmitter may be the STA, and the corresponding receiver is the AP; alternatively, the transmitter may be the AP, and the corresponding receiver is the STA.

The STA may include, for example, a wireless communication chip, a wireless sensor, or a wireless communication terminal which supports WiFi function. Optionally, the wireless communication terminal may include, for example, at least one of a mobile phone, a wearable device, an Internet of Things (IoT) device supporting WiFi communication function, a vehicle having WiFi communication function, a smart vehicle, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal devices in smart grid, a wireless terminal device in transportation safety, a wireless terminal device in smart city, or a wireless terminal device in smart home or the like, however which is not limited thereto.

Specifically, the STA may be a terminal device or network device having a wireless fidelity (WiFi) chip. Optionally, the STA may support a plurality of WLAN standards such as 802.11ax, 802.11be, 802.11ac, 802.11n, 802.11g, 802.11b, and 802.11a, and may also support next-generation 802.11 protocols, which however is not limited thereto.

In some embodiments, the AP may be an access point for a mobile terminal into a wired network. The AP corresponds to a bridge connecting wired and wireless networks, and the main function thereof is to connect various wireless network clients and then connect the wireless network to the Ethernet. Specifically, the AP may be a terminal device or network device having a Wi-Fi chip. Optionally, the AP may support a plurality of WLAN standards such as 802.11ax, 802.11be, 802.11ac, 802.11n, 802.11g, 802.11b, and 802.11a, and may also support next-generation 802.11 protocols, which however is not limited thereto.

Optionally, in the embodiments of the present disclosure, the AP and STA may be devices supporting multi-link. For example, they may be represented respectively as an access point multi-link device (AP MLD) and a non-access point multi-link device (Non-AP MLD). The AP MLD may represent an access point supporting multi-link communication function, and the Non-AP MLD may represent a station supporting multi-link communication function.

It shall be understood that the communication system described in the embodiments of the present disclosure are intended to illustrate the technical solutions of the embodiments of the present disclosure more clearly and do not constitute limitations on the technical solutions provided by the embodiments of the present disclosure. A person skilled in the art may appreciate that, with the evolution of system architecture and the emergence of new service scenario, the technical solutions provided by the embodiments of the present disclosure are equally applicable to similar technical problems.

The following embodiments of the present disclosure may be applied to the communication system 100 shown in FIG. 1, or part of entities thereof, however the present disclosure is not limited thereto. The entities in FIG. 1 are illustrative. The communication system may include all or part of the entities shown in FIG. 1, or may include other entities than that shown in FIG. 1. The number and configuration of entities are arbitrary. The entities may be physical or virtual. The connections between entities are illustrative. The entities may be connected or unconnected, and the connection may be in any manner - they may be connected directly or indirectly, via wired or wireless means.

The embodiments of the present disclosure may be applied to a Wireless Local Area Network (WLAN), such as a local area network employing the 802.11 protocols. Within the WLAN, a Basic Service Set (BSS) is a fundamental component thereof. A BSS network includes stations having an association within a specific coverage area. A form of such association is that stations communicate with each other directly within a self-organized network, which is referred to as an Independent Basic Service Set (IBSS). Another more common form is that a single central station in the BSS network is dedicated to managing the BSS, which is referred to as an access point (AP), and other stations than the AP in the BSS network are referred to as terminals, also known as non-AP STAs, and the AP and non-AP STA are collectively referred to as STAs. When describing the STA, it may not distinguish between the AP and the non-AP STA. Within the same BSS network, due to factors such as distance and transmission power, an STA may detect another STA located far therefrom, and the two STAs become hidden nodes to each other.

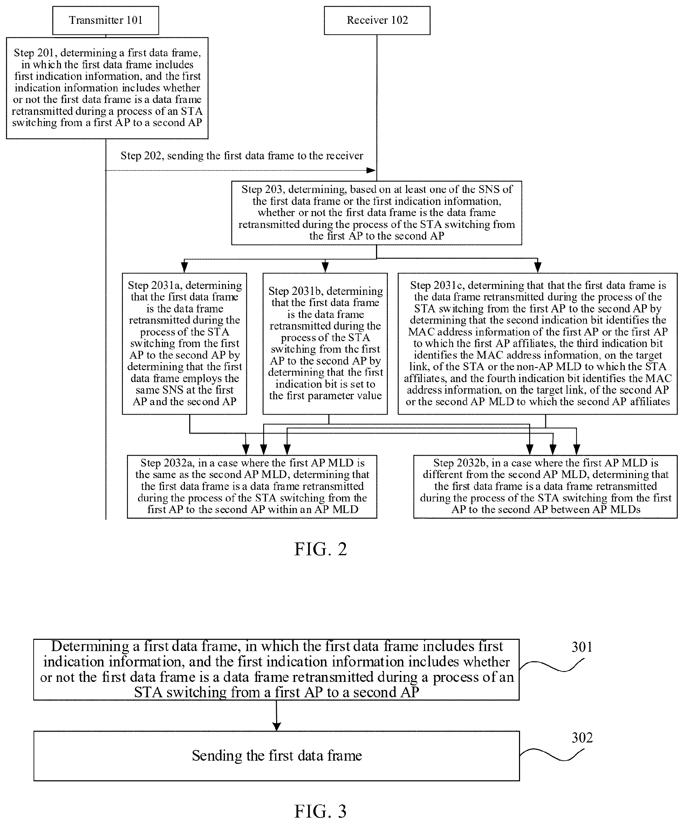

FIG. 2 is a first schematic interaction diagram of a data frame transmission method according to an embodiment of the present disclosure. As shown in FIG. 2, the above method includes the following steps.

In step 201, a transmitter 101 determines a first data frame, in which the first data frame includes first indication information, and the first indication information includes whether or not the first data frame is a data frame retransmitted during a process of an STA switching from a first AP to a second AP.

Within the UHR, a low-latency service transmission mechanism may be further enhanced. During a process of an STA transmitting low-latency services, the STA may switch between APs (i.e., the STA roams between the APs). To meet latency requirements of the low-latency services, the STA may switch between a plurality of AP devices within the UHR. For example, when the location of the STA changes, and the STA is in the low-latency service communication with AP1 or is in the low-latency service (such as Tunneled Direct Link Setup service) communication with the management of the AP1, the STA switches to AP2 to continue the low-latency service transmission. Alternatively, when the STA is in the data communication with the AP1, the STA roams from the coverage area of the AP1 into the coverage area of the AP2, resulting in degraded communication link quality between the STA and the AP1, the STA seamlessly switches to the AP2 for data communication, ensuring the data transmission not disconnected.

In an embodiment of the present disclosure, the first data frame may be transmitted between the STA and the AP. The first data frame may be a Quality of Service (QoS) data frame.

To achieve data transmission without latency, in an embodiment of the present disclosure, the first indication information in the first data frame may be used to identify whether or not the first data frame is the data frame retransmitted during the process of the STA switching from the first AP to the second AP.

It shall be understood that in an embodiment of the present disclosure, the STA may be a non-AP MLD, and the AP may be an AP MLD. For the sake of illustration, it takes the STA and the AP as an example to describe the embodiments of the present disclosure in the following, which however does not constitute limitations on the embodiments of the present disclosure.

Optionally, the first AP may be an AP with which the STA currently communicates, and there may be a plurality of second APs. The second AP and the first AP may affiliate to the same AP MLD, i.e., the STA switches from the first AP to the second AP within the AP MLD. The second AP and the first AP may not affiliate to the same AP MLD, i.e., the STA switches from the first AP to the second AP between AP MLDs.

Specifically, the first data frame may be transmitted between the STA and the second AP (i.e., a target AP). For example, the first data frame may be sent from the STA to the second AP, or from the second AP to the STA.

In an embodiment of the present disclosure, the transmitter determines the first data frame which carries the first indication information. The first indication information identifies whether or not the first data frame is the data frame retransmitted during the process of the STA switching from the first AP to the second AP. Therefore, when the communication status of the AP with which the STA establishes the current communication link changes, and the STA switches to another AP (i.e., the second AP or target AP) and then communicates with the switched AP, the receiver of the first data frame can determine whether or not the first data frame is the data frame retransmitted during the process of the STA switching from the first AP to the second AP, and performs subsequent transmission based on this determination, so that the data transmission between the STA and the AP with which the STA establishes the current communication link is not disconnected, which satisfies the transmission rate requirements of UHR and the latency requirements of a low-latency service.

In some embodiments, the first data frame may be a data frame (an uplink data frame) for transmitting service data, which is sent directly by the STA to the second AP. The first data frame may also be a data frame (a downlink data frame) for transmitting service data, which is sent directly by the second AP to the STA.

When the first data frame is an uplink (UL) data frame, the transmitter of the first data frame includes the STA or the non-AP MLD to which the STA affiliates; and when the first data frame is a downlink (DL) data frame, the transmitter of the first data frame includes the second AP or the second AP MLD to which the second AP affiliates. That is, the transmitter of the first data frame may be a device supporting multi-link communication, or a device not supporting multi-link communication.

Optionally, when the first data frame is a downlink QoS data frame, it may specifically be an MSDU (MAC Service Data Unit) or an A-MSDU (Aggregation MAC Service Data Unit, obtained by aggregating MSDUs).

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The parameter value of the first indication bit may be set to either "1" or "0". For example, the first parameter value may be set to "1", and the second parameter value may be set to "0". When the first indication bit is set to 1, it identifies that the first data frame is the data frame retransmitted during the process of the STA switching from the first AP to the second AP. When the first indication bit is set to 0, it identifies that the first data frame is not the data frame retransmitted during the process of the STA switching from the first AP to the second AP.

In the above embodiments, the first indication bit is provided with a numerical value, the first indication bit is set to the first parameter value to identify that the first data frame is the data frame retransmitted during the process of the STA switching from the first AP to the second AP, and the first indication bit is set to the second parameter value to identify that the first data frame is not the data frame retransmitted during the process of the STA switching from the first AP to the second AP, which can reduce a transmission data volume for the first data frame during the transmission thereof.

In some embodiments, when the first data frame is the data frame retransmitted during the process of the STA switching from the first AP to the second AP, the first data frame employs a same sequence number space (SNS) at the first AP and the second AP.

Optionally, when the first data frame employs the same SNS at the first AP and the second AP, the first data frame is the data frame retransmitted during the process of the STA switching from the first AP to the second AP. When the first data frame employs different SNSs at the first AP and the second AP, the first data frame is not the data frame retransmitted during the process of the STA switching from the first AP to the second AP.

In the above embodiments, the same SNS is employed to identify that the first data frame is the data frame retransmitted during the process of the STA switching from the first AP to the second AP, so that the receiver of the first data frame can learn whether or not the currently received data frame is the data frame retransmitted during the switching process from the first AP to the second AP. Therefore, upon determining that the first data frame is the data frame retransmitted during the process of the STA switching from the first AP to the second AP, the receiver performs subsequent transmission based on this determination, so that the data transmission between the STA and the AP with which the STA establishes a current communication link is not disconnected, which satisfies the transmission rate requirements of UHR and the latency requirements of a low-latency service.

In an embodiment of the present disclosure, it may further determine, based on the following manners, whether the first data frame is the data frame retransmitted during the process of the STA switching from the first AP to the second AP within the AP MLD or between AP MLDs.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC (Media Access Control) address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

Optionally, the first indication information may be carried within an address field of the first data frame. Specifically, the second indication bit may be carried within an A1 address field (Address 1) of the first data frame, the third indication bit may be carried within an A2 address field (Address 2) of the first data frame, and the fourth indication bit may be carried within an A3 address field (Address 3) of the first data frame.

Optionally, when the first AP does not support multi-link communication, the second indication bit may identify the MAC address information of the first AP; and when the first AP supports multi-link communication, the second indication bit may identify the MAC address information of the first AP MLD to which the first AP affiliates.

Optionally, when the STA does not support multi-link communication, the third indication bit may identify the MAC address information of the STA on the target link; and when the STA supports multi-link communication, the third indication bit may identify the MAC address information of the non-AP MLD to which the STA affiliates on the target link.

Optionally, when the second AP does not support multi-link communication, the fourth indication bit may identify the MAC address information of the second AP on the target link; and when the second AP supports multi-link communication, the fourth indication bit may identify the MAC address information of the second AP MLD to which the second AP affiliates on the target link.

When the second indication bit identifies the MAC address information of the first AP MLD to which the first AP affiliates, the fourth indication bit identifies the MAC address information of the second AP MLD to which the second AP affiliates on the target link, and the first AP MLD is the same as the second AP MLD, this may indicate that: the first AP and second AP affiliate to the same AP MLD, and the first data frame is the data frame retransmitted during the process of the STA switching from the first AP to the second AP within the AP MLD.

When the second indication bit identifies the MAC address information of the first AP MLD to which the first AP affiliates, and the fourth indication bit identifies the MAC address information of the second AP MLD to which the second AP affiliates on the target link, and the first AP MLD is the same as the second AP MLD, this may indicate that: the first AP and second AP affiliate to different AP MLDs, and the first data frame is the data frame retransmitted during the process of the STA switching from the first AP to the second AP between the AP MLDs.

In an embodiment of the present disclosure, the first data frame carries the first indication information, and the first indication information includes the second indication bit, the third indication bit, and the fourth indication bit; the second indication bit identifies the MAC address information of the first AP or the first AP MLD to which the first AP affiliates; the third indication bit identifies the MAC address information, on the target link, of the STA or the non-AP MLD to which the STA affiliates, and the target link is the transmission link between the STA and the second AP; and the fourth indication bit identifies the MAC address information, on the target link, of the second AP or the second AP MLD to which the second AP affiliates, so that the receiver of the first data frame can determine, based on the details identified by the second, third, and fourth indication bits, whether or not the first data frame is the data frame retransmitted during the process of the STA switching from the first AP to the second AP, and moreover, when the first data frame is the data frame retransmitted during the process of the STA switching from the first AP to the second AP, the receiver can further determine whether the first data frame is the data frame retransmitted during the process of the STA switching from the first AP to the second AP within the AP MLD or between AP MLDs.

In step 202, the transmitter 101 sends the first data frame to the receiver 102.

In an embodiment of the present disclosure, the transmitter sends the first data frame which carries the first indication information. The first indication information identifies whether or not the first data frame is the data frame retransmitted during the process of the STA switching from the first AP to the second AP. Thus, during the communication between the STA and a switched AP, the receiver of the first data frame can determine whether or not the first data frame is the data frame retransmitted during the process of the STA switching from the first AP to the second AP, and performs subsequent transmission based on this determination, so that the data transmission between the STA and the AP with which the STA establishes a current communication link is not disconnected, which satisfies the transmission rate requirements of UHR and the latency requirements of a low-latency service.

In step 203, the receiver 102 determines, based on at least one of the SNS of the first data frame or the first indication information, whether or not the first data frame is the data frame retransmitted during the process of the STA switching from the first AP to the second AP.

In some embodiments, when determining that the first data frame employs the same SNS at the first AP and the second AP, the receiver 102 may determine that the first data frame is the data frame retransmitted during the process of the STA switching from the first AP to the second AP. When determining that the first data frame employs different SNSs at the first AP and the second AP, the receiver 102 may determine that the first data frame is not the data frame retransmitted during the process of the STA switching from the first AP to the second AP.

In some embodiments, when determining that the first indication information includes that the first data frame is the data frame retransmitted during the process of the STA switching from the first AP to the second AP, the receiver 102 may determine that the first data frame is the data frame retransmitted during the process of the STA switching from the first AP to the second AP. When determining that the first indication information includes that the first data frame is not the data frame retransmitted during the process of the STA switching from the first AP to the second AP, the receiver 102 may determine that the first data frame is not the data frame retransmitted during the process of the STA switching from the first AP to the second AP.

In some embodiments, when determining that the first data frame employs the same SNS at the first AP and the second AP, and the first indication information includes that the first data frame is the data frame retransmitted during the process of the STA switching from the first AP to the second AP, the receiver 102 may determine that the first data frame is the data frame retransmitted during the process of the STA switching from the first AP to the second AP. When determining that the first data frame employs different SNSs at the first AP and the second AP, and the first indication information includes that the first data frame is not the data frame retransmitted during the process of the STA switching from the first AP to the second AP, the receiver 102 may determine that the first data frame is not the data frame retransmitted during the process of the STA switching from the first AP to the second AP.

In an embodiment of the present disclosure, the receiver may determine whether or not the first data frame is the data frame retransmitted during the process of the STA switching from the first AP to the second AP based on at least one of the SNS of the first data frame or the first indication information, and then performs subsequent transmission based on this determination, so that the data transmission between the STA and the AP with which the STA establishes a current communication link is not disconnected, which satisfies the transmission rate requirements of UHR and the latency requirements of a low-latency service.

Specifically, step 203 may include the following steps.

In step 203 1a, the receiver 102 determines that the first data frame is the data frame retransmitted during the process of the STA switching from the first AP to the second AP by determining that the first data frame employs the same SNS at the first AP and the second AP.

In step 2031a, the receiver 102 may determine that the first data frame is the data frame retransmitted during the process of the STA switching from the first AP to the second AP when determining that the first data frame employs the same SNS at the first AP and the second AP; and may determine that the first data frame is not the data frame retransmitted during the process of the STA switching from the first AP to the second AP when determining that the first data frame employs different SNSs at the first AP and the second AP.

In step 2031b, the receiver 102 determines that the first data frame is the data frame retransmitted during the process of the STA switching from the first AP to the second AP by determining that the first indication bit is set to the first parameter value.

In step 2031b, the receiver 102 may determine that the first data frame is the data frame retransmitted during the process of the STA switching from the first AP to the second AP when determining that the first indication bit is set to the first parameter value; and may determine that the first data frame is not the data frame retransmitted during the process of the STA switching from the first AP to the second AP when determining that the first indication bit is set to the second parameter value.

In step 2031c, the receiver 102 determines that that the first data frame is the data frame retransmitted during the process of the STA switching from the first AP to the second AP by determining that the second indication bit identifies the MAC address information of the first AP or the first AP to which the first AP affiliates, the third indication bit identifies the MAC address information, on the target link, of the STA or the non-AP MLD to which the STA affiliates, and the fourth indication bit identifies the MAC address information, on the target link, of the second AP or the second AP MLD to which the second AP affiliates.

Optionally, the receiver 102 may parse a frame format of the first data frame based on this frame format, obtain the address field within the first data frame, and then determine the specific content identified by the second indication bit in Address 1, the specific content identified by the third indication bit in Address 2, and the specific content identified by the fourth indication bit in Address 3. The receiver 102 may determine that that the first data frame is the data frame retransmitted during the process of the STA switching from the first AP to the second AP when determining that the second indication bit identifies the MAC address information of the first AP or the first AP to which the first AP affiliates, the third indication bit identifies the MAC address information, on the target link, of the STA or the non-AP MLD to which the STA affiliates, and the fourth indication bit identifies the MAC address information, on the target link, of the second AP or the second AP MLD to which the second AP affiliates

In an embodiment of the present disclosure, the receiver may determine whether or not the first data frame is the data frame retransmitted during the process of the STA switching from the first AP to the second AP specifically based on at least one of the SNS of the first data frame or the specific contents of the first indication information, and then performs subsequent transmission based on this determination, so that the data transmission between the STA and the AP with which the STA establishes a current communication link is not disconnected, which satisfies the transmission rate requirements of UHR and the latency requirements of a low-latency service.

Upon determining that that the first data frame is the data frame retransmitted during the process of the STA switching from the first AP to the second AP, the receiver 102 may further determine, based on the following steps, whether the process of the STA switching from the first AP to the second AP occurs within the AP MLD or between the AP MLDs, i.e., whether the first data frame is the data frame retransmitted during the process of the STA switching from the first AP to the second AP within the AP MLD or the data frame retransmitted during the process of the STA switching from the first AP to the second AP between the AP MLDs.

In step 2032a, the receiver 102 determines that the first data frame is a data frame retransmitted during the process of the STA switching from the first AP to the second AP within an AP MLD by determining that the first data frame is the data frame retransmitted during the process of the STA switching from the first AP to the second AP, and the first AP MLD is the same as the second AP MLD.

In step 2032b, the receiver 102 determines that the first data frame is a data frame retransmitted during the process of the STA switching from the first AP to the second AP between AP MLDs by determining that the first data frame is the data frame retransmitted during the process of the STA switching from the first AP to the second AP, and the first AP MLD is different from the second AP MLD.

In an embodiment of the present disclosure, the receiver can determine whether the first data frame is the data frame retransmitted during the process of the STA switching from the first AP to the second AP within an AP MLD or the data frame retransmitted during the process of the STA switching from the first AP to the second AP between AP MLDs specifically based on whether or not the first AP MLD to which the first AP affiliates and the second AP MLD to which the second AP affiliates are the same, and then performs subsequent transmission based on this determination, so that the data transmission between the STA and the AP with which the STA establishes a current communication link is not disconnected, which satisfies the transmission rate requirements of UHR and the latency requirements of a low-latency service.

In some embodiments, the name such as information is not limited to that recited in the embodiments, and the terms such as "information", "message", "signal", "signaling", "report", "configuration", "indication", "instruction", "command", "channel", "parameter", "domain", "field", "symbol", "bit", "data", "program", and "chip" may be used interchangeably.

In some embodiments, the terms such as "moment", "time point", "time", and "time position" may be used interchangeably, and the terms "duration", "period", "time window", "window", and "time" may also be used interchangeably.

In some embodiments, the terms such as wireless access scheme and waveform may be used interchangeably.

In some embodiments, the terms such as "certain", "preseted", "predetermined", "set", "indicated", "a certain", "any", "first", etc., may be used interchangeably, the terms such as "specific A", "preset A", "predetermined A", "set A", "indicated A", "a certain A", "any A", "first A" may be interpreted as A predefined in a protocol, etc., or as A obtained through setting, configuring, or indicating, etc., or as specific A, a certain A, any A, or first A, etc., however the present disclosure is not limited thereto.

In some embodiments, the determination or judgement may be performed by using a value (0 or 1) represented by one bit, by using a Boolean value represented by true or false, or by comparing a numerical value (e.g., to a predetermined value), however the present disclosure is not limited thereto.

In some embodiments, "not expecting to receive" may be interpreted as not receiving on time-domain resources and/or frequency-domain resources, or as not performing subsequent processing on data, etc., after receiving such data, etc.; and "not expecting to send" may be interpreted as not sending, or as sending but not expecting the recipient to respond to the sent content.

The data frame transmission method of the embodiments of the present disclosure may include at least one of the above steps and the embodiments. For example, step 201 may be implemented as an independent embodiment; step 203 may be implemented as an independent embodiment; the combination of step 201 and step 202 may be implemented as an independent embodiment; the combination of step 201, step 202 and step 203 may be implemented as an independent embodiment; the combination of step 201, step 202 and step 2031a in step 203 may be implemented as an independent embodiment; the combination of step 201, step 202 and step 2031b in step 203 may be implemented as an independent embodiment; the combination of step 201, step 202, and step 2031c in step 203 may be implemented as an independent embodiment; the combination of step 201, step 202, and step 2031a and step 2031b in step 203 may be implemented as an independent embodiment; the combination of step 201, step 202, and step 2031a and step 2031c in step 203 may be implemented as independent embodiments; the combination of step 201, step 202, and step 2031b and step 2031c in step 203 may be implemented as an independent embodiment; the combination of step 201, step 202, and step 2031a, step 2032a and step 2032b in step 203 may be implemented as an independent embodiment; the combination of step 201, step 202, and step 2031b, step 2032a and step 2032b in step 203 may be implemented as an independent embodiment; the combination of step 201, step 202, and step 2031c, step 2032a and step 2032b in step 203 may be implemented as an independent embodiment; the combination of step 201, step 202, and step 2031a, step 2031b, step 2032a and step 2032b in step 203 may be implemented as an independent embodiment; the combination of step 201, step 202, and step 2031a, step 2031c, step 2032a and step 2032b in step 203 may be implemented as an independent embodiment; and the combination of step 201, step 202, and step 2031b, step 2031c, step 2032a and step 2032b in step 203 may be implemented as an independent embodiment, however the present disclosure is not limited thereto.

In some embodiments, reference may be made to other optional implementations described before or after the description corresponding to FIG. 2.

FIG. 3 is a first schematic flow diagram of a data frame transmission method according to an embodiment of the present disclosure.

As shown in FIG. 3, the above method may be applied to a transmitter 101, and includes the following steps.

In step 301, the transmitter 101 determines a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 301 may refer to the optional implementation of step 201 in FIG. 2 and other related parts of the embodiments in FIG. 2, which is not repeated herein.

In step 302, the transmitter 101 sends the first data frame to a receiver 102.

An optional implementation of step 302 may refer to the optional implementation of step 202 in FIG. 2 and other related parts of the embodiments in FIG. 2, which is not repeated herein.

The data frame transmission method of the embodiments of the present disclosure may include at least one of the above steps and the embodiments. For example, step 301 may be implemented as an independent embodiment; step 302 may be implemented as an independent embodiment; the combination of step 301 and step 302 may be implemented as an independent embodiment, however the present disclosure is not limited thereto.

In some embodiments, reference may be made to other optional implementations described before or after the description corresponding to FIG. 3.

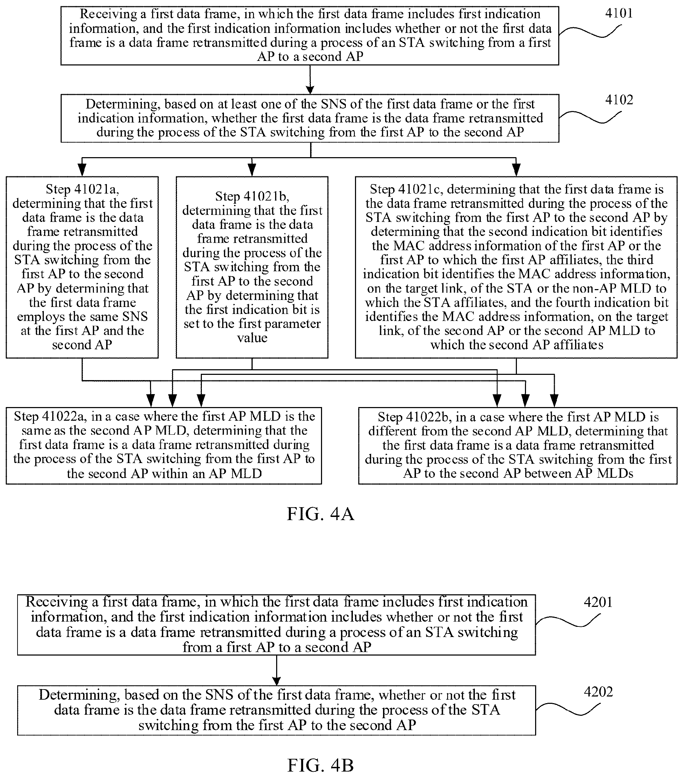

FIG. 4A is a second schematic flow diagram of a data frame transmission method according to an embodiment of the present disclosure.

As shown in FIG. 4A, the above method may be applied to a receiver 102, and includes the following steps.

In step 4101, the receiver 102 receives a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 4101 may refer to the optional implementation of step 201 and step 202 in FIG. 2 and other related parts of the embodiments in FIG. 2, which is not repeated herein.

In step 4102, the receiver 102 determines, based on at least one of the SNS of the first data frame or the first indication information, whether or not the first data frame is the data frame retransmitted during the process of the STA switching from the first AP to the second AP.

In some embodiments, step 4102 may include:
step 41021a, determining, by the receiver 102, that the first data frame is the data frame retransmitted during the process of the STA switching from the first AP to the second AP by determining that the first data frame employs the same SNS at the first AP and the second AP;
step 41021b, determining, by the receiver 102, that the first data frame is the data frame retransmitted during the process of the STA switching from the first AP to the second AP by determining that the first indication bit is set to the first parameter value;
step 41021c, determining, by the receiver 102, that the first data frame is the data frame retransmitted during the process of the STA switching from the first AP to the second AP by determining that the second indication bit identifies the MAC address information of the first AP or the first AP MLD to which the first AP affiliates, the third indication bit identifies the MAC address information, on the target link, of the STA or the non-AP MLD to which the STA affiliates, and the fourth indication bit identifies the MAC address information, on the target link, of the second AP or the second AP MLD to which the second AP affiliates;
step 41022a, determining, by the receiver 102, that the first data frame is a data frame retransmitted during the process of the STA switching from the first AP to the second AP within an AP MLD by determining that the first data frame is the data frame retransmitted during the process of the STA switching from the first AP to the second AP, and the first AP MLD is the same as the second AP MLD; and
step 41022b, determining, by the receiver 102, that the first data frame is a data frame retransmitted during the process of the STA switching from the first AP to the second AP between AP MLDs by determining that the first data frame is the data frame retransmitted during the process of the STA switching from the first AP to the second AP, and the first AP MLD is different from the second AP MLD.

An optional implementation of step 4102 may refer to the optional implementations of steps 203, 2031a, 2031b, 2031c, 2032a, and 2032b in FIG. 2, and other related parts of the embodiments in FIG. 2, which is not repeated herein.

The data frame transmission method of the embodiments of the present disclosure may include at least one of the above steps and the embodiments. For example, step 4101 may be implemented as an independent embodiment, step 4102 may be implemented as an independent embodiment, and the combination of steps 4101 and 4102 may be implemented as an independent embodiment, however the present disclosure is not limited thereto.

In some embodiments, reference may be made to other optional implementations described before or after the description corresponding to FIG. 4A.

FIG. 4B is a third schematic flow diagram of a data frame transmission method according to an embodiment of the present disclosure.

As shown in FIG. 4B, the above method may be applied to a receiver 102, and includes the following steps.

In step 4201, the receiver 102 receives a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 4201 may refer to the optional implementation of step 201 and step 202 in FIG. 2 and other related parts of the embodiments in FIG. 2, which is not repeated herein.

In step 4202, the receiver 102 determines, based on the SNS of the first data frame, whether or not the first data frame is the data frame retransmitted during the process of the STA switching from the first AP to the second AP.

Optionally, the receiver 102 determines that the first data frame is the data frame retransmitted during the process of the STA switching from the first AP to the second AP by determining that the first data frame employs the same SNS at the first AP and the second AP.

If the receiver 102 determines that the first data frame is the data frame retransmitted during the process of the STA switching from the first AP to the second AP, and the first AP MLD to which the first AP affiliates is the same as the second AP MLD to which the second AP affiliates, it determines that the first data frame is a data frame retransmitted during the process of the STA switching from the first AP to the second AP within an AP MLD. If the receiver 102 determines that the first data frame is the data frame retransmitted during the process of the STA switching from the first AP to the second AP, and the first AP MLD is different from the second AP MLD, it determines that the first data frame is a data frame retransmitted during the process of the STA switching from the first AP to the second AP between AP MLDs.

An optional implementation of step 4202 may refer to the optional implementations of steps 203, 2031a, 2032a, and 2032b in FIG. 2, and other related parts of the embodiments in FIG. 2, which is not repeated herein.

The data frame transmission method of the embodiments of the present disclosure may include at least one of the above steps and the embodiments. For example, step 4201 may be implemented as an independent embodiment, step 4202 may be implemented as an independent embodiment, and the combination of steps 4201 and 4202 may be implemented as an independent embodiment, however the present disclosure is not limited thereto.

In some embodiments, reference may be made to other optional implementations recited before or after the description corresponding to FIG. 4B.

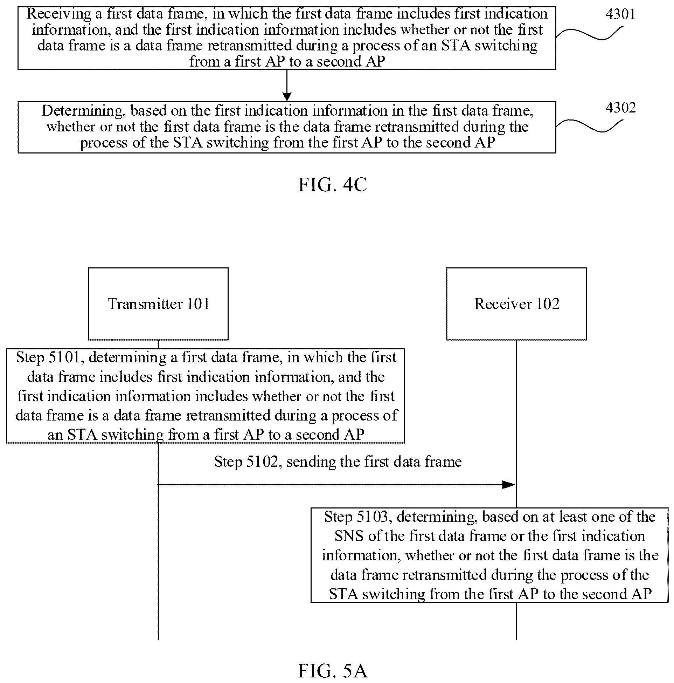

FIG. 4C is a fourth schematic flow diagram of a data frame transmission method according to an embodiment of the present disclosure.

As shown in FIG. 4C, the above method may be applied to a receiver 102, and includes the following steps.

In step 4301, the receiver 102 receives a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 4301 may refer to the optional implementation of step 201 and step 202 in FIG. 2 and other related parts of the embodiments in FIG. 2, which is not repeated herein.

In step 4302, the receiver 102 determines, based on the first indication information in the first data frame, whether or not the first data frame is the data frame retransmitted during the process of the STA switching from the first AP to the second AP.

Optionally, the receiver 102 determines that the first data frame is the data frame retransmitted during the process of the STA switching from the first AP to the second AP by determining that the first indication bit is set to a first parameter value.

Alternatively, the receiver 102 determines that the first data frame is the data frame retransmitted during the process of the STA switching from the first AP to the second AP by determining that the second indication bit identifies an MAC address information of the first AP or a first AP to which the first AP affiliates, the third indication bit identifies an MAC address information, on a target link, of the STA or a non-AP MLD to which the STA affiliates, and the fourth indication bit identifies an MAC address information, on the target link, of the second AP or a second AP MLD to which the second AP affiliates.

If the receiver 102 determines that the first data frame is the data frame retransmitted during the process of the STA switching from the first AP to the second AP, and the first AP MLD to which the first AP affiliates is the same as the second AP MLD to which the second AP affiliates, it determines that the first data frame is a data frame retransmitted during the process of the STA switching from the first AP to the second AP within an AP MLD. If the receiver 102 determines that the first data frame is the data frame retransmitted during the process of the STA switching from the first AP to the second AP, and the first AP MLD is different from the second AP MLD, it determines that the first data frame is a data frame retransmitted during the process of the STA switching from the first AP to the second AP between AP MLDs.

An optional implementation of step 4302 may refer to the optional implementations of steps 203, 2031b, 2031c, 2032a and 2032b in FIG. 2, and other related parts of the embodiments in FIG. 2, which is not repeated herein.

The data frame transmission method of the embodiments of the present disclosure may include at least one of the above steps and the embodiments. For example, step 4301 may be implemented as an independent embodiment, step 4302 may be implemented as an independent embodiment, and the combination of steps 4301 and 4302 may be implemented as an independent embodiment, however the present disclosure is not limited thereto.

In some embodiments, reference may be made to other optional implementations recited before or after the description corresponding to FIG. 4C.

FIG. 5A is a second schematic interaction diagram of a data frame transmission method according to an embodiment of the present disclosure.

As shown in FIG. 5A, the above method includes the following steps.

In step 5101, a transmitter 101 determines a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 5101 may refer to the optional implementation of step 201 in FIG. 2 and other related parts of the embodiments in FIG. 2, which is not repeated herein.

In step 5102, the transmitter 101 sends the first data frame to a receiver 102.

An optional implementation of step 5102 may refer to the optional implementation of step 202 in FIG. 2 and other related parts of the embodiments in FIG. 2, which is not repeated herein.

In step 5103, the receiver 102 determines, based on at least one of the SNS of the first data frame or the first indication information, whether or not the first data frame is the data frame retransmitted during the process of the STA switching from the first AP to the second AP.

In some embodiments, step 5103 may include:
step 51031a, the receiver 102 determines that the first data frame is the data frame retransmitted during the process of the STA switching from the first AP to the second AP by determining that the first data frame employs the same SNS at the first AP and the second AP
step 51031b, the receiver 102 determines that the first data frame is the data frame retransmitted during the process of the STA switching from the first AP to the second AP by determining that the first indication bit is set to the first parameter value;
step 51031c, the receiver 102 determines that that the first data frame is the data frame retransmitted during the process of the STA switching from the first AP to the second AP by determining that the second indication bit identifies the MAC address information of the first AP or the first AP to which the first AP affiliates, the third indication bit identifies the MAC address information, on the target link, of the STA or the non-AP MLD to which the STA affiliates, and the fourth indication bit identifies the MAC address information, on the target link, of the second AP or the second AP MLD to which the second AP affiliates;
step 51032a, the receiver 102 determines that the first data frame is a data frame retransmitted during the process of the STA switching from the first AP to the second AP within an AP MLD by determining that the first data frame is the data frame retransmitted during the process of the STA switching from the first AP to the second AP, and the first AP MLD is the same as the second AP MLD; and
step 51032b, the receiver 102 determines that the first data frame is a data frame retransmitted during the process of the STA switching from the first AP to the second AP between AP MLDs by determining that the first data frame is the data frame retransmitted during the process of the STA switching from the first AP to the second AP, and the first AP MLD is different from the second AP MLD.

An optional implementation of step 5103 may may refer to the optional implementations of steps 203, 2031a, 2031b, 2031c, 2032a, and 2032b in FIG. 2, and other related parts of the embodiments in FIG. 2, which is not repeated herein.

The data frame transmission method of the embodiments of the present disclosure may include at least one of the above steps and the embodiments. For example, step 5101 may be implemented as an independent embodiment; step 5102 may be implemented as an independent embodiment; step 5103 may be implemented as an independent embodiment; the combination of steps 5101 and 5102 may be implemented as an independent embodiment; and the combination of steps 5101, 5102, and 5103 may be implemented as an independent embodiment, though this is not limited thereto.

In some embodiments, reference may be made to other optional implementations described before or after the description corresponding to FIG. 5A.

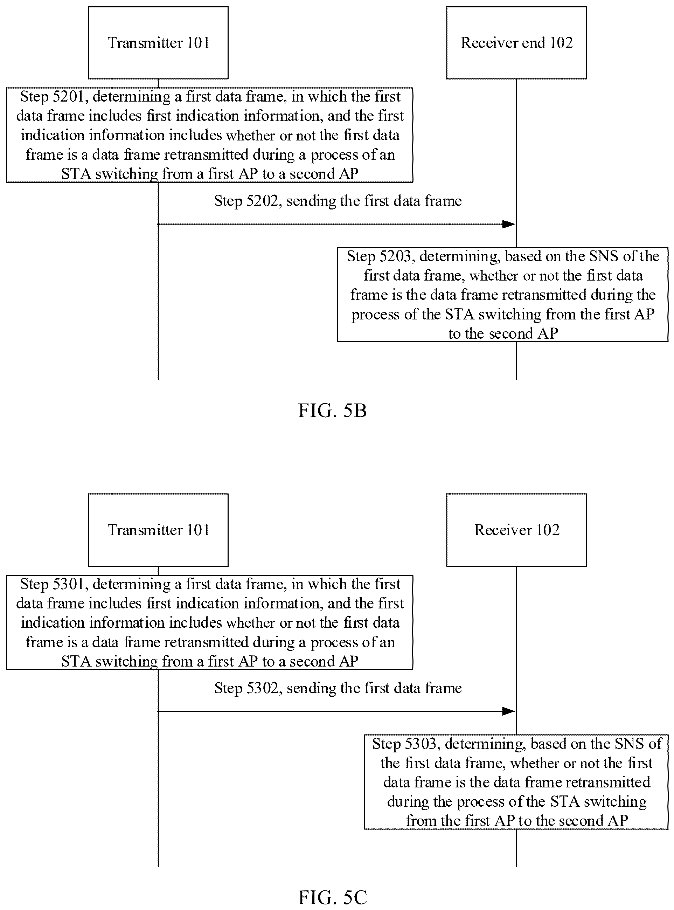

FIG. 5B is a third schematic interaction diagram of a data frame transmission method according to an embodiment of the present disclosure.

As shown in FIG. 5B, the above method includes the following steps.

In step 5201, a transmitter 101 determines a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 5201 may refer to the optional implementation of step 201 in FIG. 2 and other related parts of the embodiments in FIG. 2, which is not repeated herein.

In step 5202, the transmitter 101 sends the first data frame to a receiver 102.

An optional implementation of step 5202 may refer to the optional implementation of step 202 in FIG. 2 and other related parts of the embodiments in FIG. 2, which is not repeated herein.

In step 5203, the receiver 102 determines, based on the SNS of the first data frame, whether or not the first data frame is the data frame retransmitted during the process of the STA switching from the first AP to the second AP.

Optionally, the receiver 102 determines that the first data frame is the data frame retransmitted during the process of the STA switching from the first AP to the second AP by determining that the first data frame employs the same SNS at the first AP and the second AP.

If the receiver 102 determines that the first data frame is the data frame retransmitted during the process of the STA switching from the first AP to the second AP, and the first AP MLD to which the first AP affiliates is the same as the second AP MLD to which the second AP affiliates, it determines that the first data frame is a data frame retransmitted during the process of the STA switching from the first AP to the second AP within an AP MLD. If the receiver 102 determines that the first data frame is the data frame retransmitted during the process of the STA switching from the first AP to the second AP, and the first AP MLD is different from the second AP MLD, it determines that the first data frame is a data frame retransmitted during the process of the STA switching from the first AP to the second AP between AP MLDs.

An optional implementation of step 5203 may refer to the optional implementations of steps 203, 2031a, 2032a, and 2032b in FIG. 2, and other related parts of the embodiments in FIG. 2, which is not repeated herein.

The data frame transmission method of the embodiments of the present disclosure may include at least one of the above steps and the embodiments. For example, step 5201 may be implemented as an independent embodiment, step 5202 may be implemented as an independent embodiment, step 5203 may be implemented as an independent embodiment, the combination of steps 5201 and 5202 may be implemented as an independent embodiment, and the combination of steps 5201, 5202 and 5203 may be implemented as an independent embodiment, however the present disclosure is not limited thereto.

In some embodiments, reference may be made to other optional implementations recited before or after the description corresponding to FIG. 5B.

FIG. 5C is a fourth schematic interaction diagram of a data frame transmission method according to an embodiment of the present disclosure.

As shown in FIG. 5C, the above method includes the following steps.

In step 5301, a transmitter 101 determines a first data frame, in which the first data frame includes first indication information, and the first indication information includes whether or not the first data frame is a data frame retransmitted during a process of an STA switching from a first AP to a second AP.

In some embodiments, when the first data frame is an uplink (UL) data frame, the transmitter of the first data frame includes the STA or a non-AP MLD to which the STA affiliates; and when the first data frame is a downlink (DL) data frame, the transmitter of the first data frame includes the second AP or a second AP MLD to which the second AP affiliates.

In some embodiments, the first indication information includes a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

The volume of data is required during transmission process.

In some embodiments, when the first data frame is the data frame retransmitted during the process of the STA switching from the first AP to the second AP, the first data frame employs a same SNS at the first AP and the second AP.

In some embodiments, the first data frame is the data frame retransmitted during the process of the STA switching from the first AP to the second AP, and the first indication information includes a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

An optional implementation of step 5301 may refer to the optional implementation of step 201 in FIG. 2 and other related parts of the embodiments in FIG. 2, which is not repeated herein.

In step 5302, the transmitter 101 sends the first data frame to a receiver 102.

An optional implementation of step 5302 may refer to the optional implementation of step 202 in FIG. 2 and other related parts of the embodiments in FIG. 2, which is not repeated herein.

In step 5303, the receiver 102 determines, based on the first indication information, whether or not the first data frame is the data frame retransmitted during the process of the STA switching from the first AP to the second AP.

Optionally, the receiver 102 determines that the first data frame is the data frame retransmitted during the process of the STA switching from the first AP to the second AP by determining that the first indication bit is set to a first parameter value.

Alternatively, the receiver 102 determines that the first data frame is the data frame retransmitted during the process of the STA switching from the first AP to the second AP by determining that the second indication bit identifies an MAC address information of the first AP or a first AP to which the first AP affiliates, the third indication bit identifies an MAC address information, on a target link, of the STA or a non-AP MLD to which the STA affiliates, and the fourth indication bit identifies an MAC address information, on the target link, of the second AP or a second AP MLD to which the second AP affiliates.

If the receiver 102 determines that the first data frame is the data frame retransmitted during the process of the STA switching from the first AP to the second AP, and the first AP MLD to which the first AP affiliates is the same as the second AP MLD to which the second AP affiliates, it determines that the first data frame is a data frame retransmitted during the process of the STA switching from the first AP to the second AP within an AP MLD. If the receiver 102 determines that the first data frame is the data frame retransmitted during the process of the STA switching from the first AP to the second AP, and the first AP MLD is different from the second AP MLD, it determines that the first data frame is a data frame retransmitted during the process of the STA switching from the first AP to the second AP between AP MLDs.

An optional implementation of step 5303 may refer to the optional implementations of steps 203, 2031b, 2031c, 2032a and 2032b in FIG. 2, and other related parts of the embodiments in FIG. 2, which is not repeated herein.

The data frame transmission method of the embodiments of the present disclosure may include at least one of the above steps and the embodiments. For example, step 5301 may be implemented as an independent embodiment, step 5302 may be implemented as an independent embodiment, step 5303 may be implemented as an independent embodiment, the combination of steps 5301 and 5302 may be implemented as an independent embodiment, and the combination of steps 5301, 5302 and 53303 may be implemented as an independent embodiment, however the present disclosure is not limited thereto.

In some embodiments, reference may be made to other optional implementations recited before or after the description corresponding to FIG. 5C.

An embodiment of the present disclosure further provides a device for implementing any of the above methods. For example, a device is provided, which includes units or modules for implementing each step executed by the terminal in any of the above methods. For another example, another device is provided, which includes units or modules for implementing each step executed by the network device (e.g., access network device, core network function node, core network device, etc.) in any of the above methods.

It should be understood that the division of each unit or module within the above device represents a logical functional partitioning. In practical implementation, these units or modules may be all or partially integrated into a single physical entity, or physically separated. Furthermore, the unit or module within the device may be implemented in a form in which a processor invokes software. For example, the device may include a processor connected to a memory having instructions stored thereon. The processor invokes the instructions stored in the memory to implement any of the above methods or the function of each unit or module within the above device. The processor may be a general-purpose processor, such as a central processing unit (CPU) or microprocessor. The memory may be a memory within or outside the device. Alternatively, the unit or module within the device may be implemented in a form of a hardware circuit, and the function of some or all units or modules may be achieved by designing the hardware circuit. Such hardware circuit may be understood as one or more processors. For example, in an implementation, the hardware circuit may be an application-specific integrated circuit (ASIC), and the function of some or all units or modules may be achieved by designing the component logical relationship within the circuit. For another example, in another implementation, the above hardware circuit may be implemented through a programmable logic device (PLD). Taking a Field Programmable Gate Array (FPGA) as an example, it may include a substantial number of logic gate circuits, and by configuring the connection between these logic gate circuits via a configuration file, the function of some or all of the above units or modules may be achieved. All units or modules of the above device may be implemented entirely in the form in which a processor invokes software, entirely in the form of hardware circuit, or partially in the form in which the processor invokes software with the remaining portion implemented in the form of hardware circuit.

In an embodiment of the present disclosure, the processor is a circuit having a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement certain functions through the logical relationship of hardware circuit. The above logical relationship of hardware circuit is fixed or reconfigurable. For example, the processor is a hardware circuit implemented by application-specific integrated circuit (ASIC) or programmable logic device (PLD), such as FPGA. Within a reconfigurable hardware circuit, the processor loads a configuration file to implement hardware circuit configuration, which process may be understood as that the processor loads instructions to implement the function of some or all of the above units or modules. Furthermore, it may be a hardware circuit designed for artificial intelligence, which may be understood as an ASIC, such as Neural Network Processing Unit (NPU), Tensor Processing Unit (TPU), or Deep Learning Processing Unit (DPU).

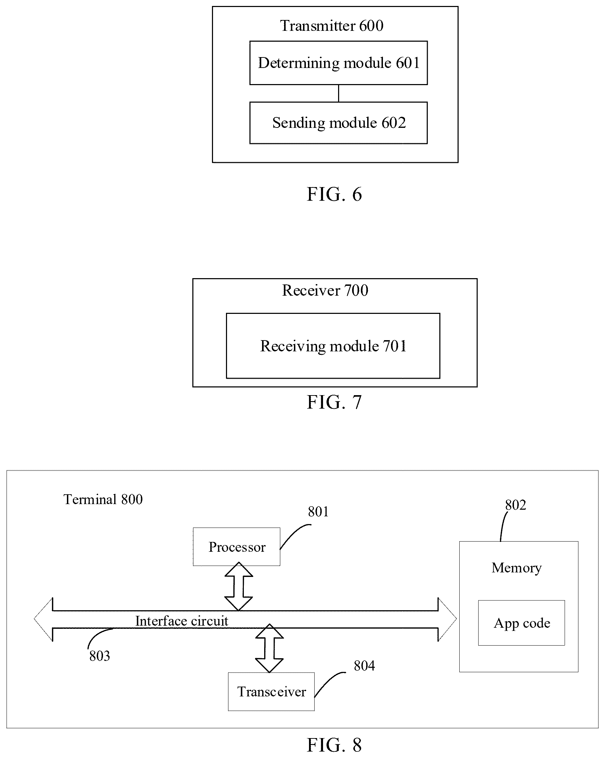

FIG. 6 is a first schematic structural schematic of a communication device according to an embodiment of the present disclosure. As shown in FIG. 6, the communication device 600 is a first communication device, which may be a transmitter, including at least one of a determining module 601 and a sending module 602.

In some embodiments, the above determination module 601 is configured to determine a first data frame, in which the first data frame includes first indication information, and the first indication information includes whether or not the first data frame is a data frame retransmitted during a process of an STA switching from a first AP to a second AP.

Optionally, the above determining module 601 is configured to execute at least one of the communication steps (e.g. step 201, step 301, step 5101, step 5201, step 5301, but not limited thereto) performed by the transmitter 101 in any of the above methods, which is not repeated herein. The sending module 602 is configured to execute steps 202, 302, 5102, 5202, and 5302.

FIG. 7 is a second schematic structural schematic of a communication device according to an embodiment of the present disclosure. As shown in FIG. 7, the communication device 700 is a second communication device, which may be a receiver, including a receiving module 701.

In some embodiments, the above receiving module 701 is configured to determine a first data frame sent by a transmitter, in which the first data frame includes first indication information, and the first indication information includes whether or not the first data frame is a data frame retransmitted during a process of an STA switching from a first AP to a second AP.

Optionally, the above receiving module 701 may be configured to execute at least one of the communication steps (e.g., step 202, step 4101, step 4201, step 4301, step 5102, step 5202, step 5302) performed by the second B device 102 in any of the above methods, which shall not be repeated herein.

In some embodiments, the transceiver module may include a sending module and/or receiving module, and the sending module and receiving module may be separate or integrated. Optionally, the transceiver module may be interchangeable with a transceiver.

FIG. 8 is a schematic structural diagram of a terminal (for example, a user equipment, etc.) 800 according to an embodiment of the present disclosure. The terminal 800 may be a chip, a chip system, or a processor supporting a network device to implement any of the above methods, or may be a chip, a chip system, or a processor supporting a terminal to implement any of the above methods. The terminal 800 may be configured to implement the method described in the above method embodiments, details of which may refer to the descriptions in the method embodiments.

As shown in FIG. 8, the terminal 800 includes one or more processors 801. The processor 801 may be a general-purpose processor or a dedicated processor, such as a baseband processor or a central processer. The baseband processor may be configured to process communication protocol and communication data, and the central processor may be configured to control a communication device (such as base station, baseband chip, terminal device, terminal device chip, DU or CU, etc.), execute program, and process program data. The terminal 800 is configured to execute any of the above methods.

In some embodiments, the terminal 800 further includes one or more memories 802 for storing instructions. Optionally, all or part of the memories 802 may also be located outside the terminal 800.

In some embodiments, the terminal 800 further includes one or more transceivers 804. Where the terminal 800 includes one or more transceivers 803, the transceiver(s) 804 performs at least one of the communication steps such as sending step and/or receiving step (e.g., steps 202, 204, 206, 302, 303, 305, 401, 403, 404, 502, 504, 506, which however is not limited thereto) in the above methods, and the processor 801 performs at least one of other steps (e.g., steps 201, 203, 205, 207, 301, 304, 402, 405, 501, 503, 505, and 507, which however is not limited thereto).

In some embodiments, the transceiver may include a receiver and/or a sender, and the receiver and the sender may be separate or integrated. Optionally, the terms transceiver, transceiver unit, transceiver machine, transceiver circuit, etc., may be used interchangeably; the terms sender, sending unit, sending machine, sending circuit, etc., may be used interchangeably; and the terms receiver, receiving unit, receiving machine, receiver circuit, etc., may be used interchangeably.

In some embodiments, the terminal 800 may include one or more interface circuits 803. Optionally, the interface circuit 803 is connected to the memory 802, and the interface circuit 803 may be configured to receive signals from the memory 802 or other devices, and may be configured to send signals to the memory 802 or other devices. For example, the interface circuit 803 may read instructions stored in the memory 802 and send these instructions to the processor 801.

The terminal 800 described in the above embodiments may be a communication device such as a user equipment, but the scope of the terminal 800 described herein is not limited thereto. The structure of the terminal 800 may not be limited by FIG. 8. The communication device may be a standalone device or part of a large device. For example, the communication device may be: (1) an independent integrated circuit (IC), chip, chip system, or subsystem; (2) an assembly including one or more ICs, optionally including storage components for data and programs; (3) an ASIC, such as a modem; (4) a module embeddable within other devices; (5) a receiver, terminal device, smart terminal device, cellular telephone, wireless device, handheld device, mobile unit, in-vehicle device, network device, cloud device, artificial intelligence device, etc.; (6) other devices, etc.

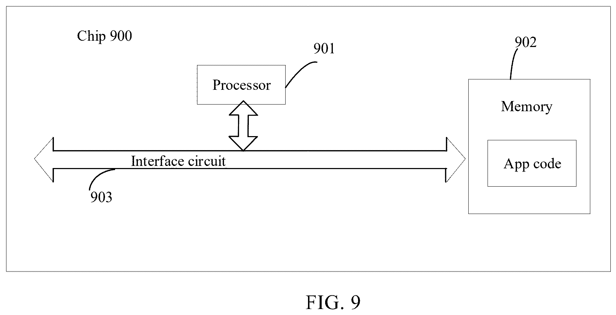

FIG. 9 is a structural diagram of a chip 900 according to an embodiment of the present disclosure. Where the terminal 800 may be a chip or chip system, reference may be made to the schematic diagram of chip 900 shown in FIG. 9, which however is not limited thereto.

The chip 900 includes one or more processors 901, and is configured to execute any of the above methods.

In some embodiments, the chip 900 further includes one or more 903. Optionally, the interface circuit 903 is connected to memory 902. The interface circuit 903 may be configured to receive signals from the memory 902 or other devices, and may be configured to send signals to the memory 902 or other devices. For example, the interface circuit 903 may read instructions stored in the memory 902 and send these instructions to the processor 901.

In some embodiments, the interface circuit 903 performs at least one of the communication steps such as sending step and/or receiving step (e.g., steps 202, 204, 206, 302, 303, 305, 401, 403, 404, 502, 504, 506, which however is not limited thereto) in the above methods, and the processor 901 performs at least one of other steps (e.g., steps 201, 203, 205, 207, 301, 304, 402, 405, 501, 503, 505, and 507, which however is not limited thereto).

In some embodiments, the terms such as interface circuit, interface, transceiver pin, transceiver, etc., may be used interchangeably.

In some embodiments, the chip 900 further includes one or more memories 902 for storing instructions. Optionally, all or part of the memories 902 may reside outside the chip 900.

The present disclosure further provides a storage medium having instructions stored thereon. The above instructions, when executed on the terminal 800, cause the terminal 800 to perform any one of the above methods. Optionally, the storage medium is an electronic storage medium. Optionally, the storage medium is a computer-readable storage medium, which however is not limited thereto; and it may also be a storage medium readable by other devices. Optionally, the storage medium may be a non-transitory storage medium, which however is not limited thereto and may also be a transitory storage medium.

The present disclosure further provides a program product which, when executed by the terminal 800, causes the terminal 800 to perform any one of the above methods. Optionally, the program product is a computer program product.

The present disclosure further provides a computer program which, when executed on a computer, causes the computer to perform any one of the above methods.

## Claims

1. A data frame transmission method, comprising:
determining, by a transmitter, a first data frame, wherein the first data frame comprises first indication information, and the first indication information identifies whether or not the first data frame is a data frame retransmitted during a process of a station, STA, switching from a first access point, AP, to a second AP; and
sending the first data frame.

2. The data frame transmission method according to claim 1, wherein the first indication information comprises a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

3. The data frame transmission method according to claim 1 or 2, wherein the first data frame is the data frame retransmitted during the process of the STA switching from the first AP to the second AP, and the first indication information comprises a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

4. The data frame transmission method according to any one of claims 1 to 3, wherein the first data frame is the data frame retransmitted during the process of the STA switching from the first AP to the second AP, the first data frame employs a same sequence number space, SNS, at the first AP and the second AP.

5. The method according to claim 4, wherein a receiver determines, based on at least one of the SNS of the first data frame or the first indication information, whether or not the first data frame is the data frame retransmitted during the process of the STA switching from the first AP to the second AP.

6. The method according to claim 5, wherein determining, by the receiver, that the first data frame is the data frame retransmitted during the process of the STA switching from the first AP to the second AP comprises at least one of:
determining, by the receiver, that the first data frame is the data frame retransmitted during the process of the STA switching from the first AP to the second AP by determining that the first data frame employs the same SNS at the first AP and the second AP;
determining, by the receiver, that the first data frame is the data frame retransmitted during the process of the STA switching from the first AP to the second AP by determining that the first indication bit is set to the first parameter value; or
determining, by the receiver, that the first data frame is the data frame retransmitted during the process of the STA switching from the first AP to the second AP by determining that the second indication bit identifies the MAC address information of the first AP or the first AP MLD, the third indication bit identifies the MAC address information, on the target link, of the STA or the non-AP MLD, and the fourth indication bit identifies the MAC address information, on the target link, of the second AP or the second AP MLD.

7. The method according to claim 5 or 6, wherein
if the receiver determines that the first data frame is the data frame retransmitted during the process of the STA switching from the first AP to the second AP, and the first AP MLD is the same as the second AP MLD, the receiver determines that the first data frame is a data frame retransmitted during the process of the STA switching from the first AP to the second AP within an AP MLD; and
if the receiver determines that the first data frame is the data frame retransmitted during the process of the STA switching from the first AP to the second AP, and the first AP MLD is different from the second AP MLD, the receiver determines that the first data frame is a data frame retransmitted during the process of the STA switching from the first AP to the second AP between AP MLDs.

8. A data frame transmission method, comprising:
receiving, by a receiver, a first data frame, wherein the first data frame comprises first indication information, and the first indication information identifies whether or not the first data frame is a data frame transmitted to a second AP during a process of an STA switching from a first AP to the second AP.

9. The data frame transmission method according to claim 8, wherein the first indication information comprises a first indication bit;
the first indication bit is set to a first parameter value to identify that the first data frame is the data frame retransmitted during the process of the STA switching from the first AP to the second AP; and
the first indication bit is set to a second parameter value to identify that the first data frame is not the data frame retransmitted during the process of the STA switching from the first AP to the second AP.

10. The data frame transmission method according to claim 8 or 9, wherein the first data frame is the data frame retransmitted during the process of the STA switching from the first AP to the second AP, and the first indication information comprises a second indication bit, a third indication bit, and a fourth indication bit;
the second indication bit identifies an MAC address information of the first AP or a first AP MLD to which the first AP affiliates;
the third indication bit identifies an MAC address information, on a target link, of the STA or a non-AP MLD to which the STA affiliates, and the target link is a transmission link between the STA and the second AP; and
the fourth indication bit identifies an MAC address information, on the target link, of the second AP or a second AP MLD to which the second AP affiliates.

11. The data frame transmission method according to any one of claims 5 to 10, wherein the first data frame is the data frame retransmitted during the process of the STA switching from the first AP to the second AP, and the first data frame employs a same SNS at the first AP and the second AP.

12. The method according to claim 11, further comprising:
determining, by the receiver and based on at least one of the SNS of the first data frame or the first indication information, whether or not the first data frame is the data frame retransmitted during the process of the STA switching from the first AP to the second AP.

13. The method according to claim 12, wherein determining, by the receiver, that the first data frame is the data frame retransmitted during the process of the STA switching from the first AP to the second AP comprises at least one of:
determining, by the receiver, that the first data frame is the data frame retransmitted during the process of the STA switching from the first AP to the second AP by determining that the first data frame employs the same SNS at the first AP and the second AP;
determining, by the receiver, that the first data frame is the data frame retransmitted during the process of the STA switching from the first AP to the second AP by determining that the first indication bit is set to the first parameter value; or
determining, by the receiver, that the first data frame is the data frame retransmitted during the process of the STA switching from the first AP to the second AP by determining that the second indication bit identifies the MAC address information of the first AP or the first AP MLD, the third indication bit identifies the MAC address information, on the target link, of the STA or the non-AP MLD, and the fourth indication bit identifies the MAC address information, on the target link, of the second AP or the second AP MLD.

14. The method according to claim 12 or 13, further comprising:
if determining that the first data frame is the data frame retransmitted during the process of the STA switching from the first AP to the second AP, and the first AP MLD is the same as the second AP MLD, determining that the first data frame is a data frame retransmitted during the process of the STA switching from the first AP to the second AP within an AP MLD; and
if determining that the first data frame is the data frame retransmitted during the process of the STA switching from the first AP to the second AP, and the first AP MLD is different from the second AP MLD, determining that the first data frame is a data frame retransmitted during the process of the STA switching from the first AP to the second AP between AP MLDs.

15. A communication device, wherein the communication device is a transmitter, and comprises:
a determining module, configured to determine a first data frame, wherein the first data frame comprises first indication information, and the first indication information identifies whether or not the first data frame a data frame retransmitted during a process of an STA switching from a first AP to a second AP; and
a sending module, configured to send the first data frame.

16. A communication device, wherein the communication device is a receiver, and comprises: a receiving module, configured to receive a first data frame, wherein the first data frame comprises first indication information, and the first indication information identifies if the first data frame a data frame transmitted to a second AP during a process of an STA switching from a first AP to the second AP.

17. A communication device, wherein the communication device is a transmitter, and comprises:
one or more processors;
wherein the communication device is configured to perform the data frame transmission method according to any one of claims 1 to 7.

18. A communication device, wherein the communication device is a receiver, and comprises:
one or more processors;
wherein the communication device is configured to perform the data frame transmission method according to any one of claims 8 to 14.

19. A communication system comprising a first communication device and a second communication device, wherein the first communication device is a transmitter, the second communication device is a receiver, the first communication device is configured to implement the data frame transmission method according to any one of claims 1 to 7, and the second communication device is configured to implement the data frame transmission method according to any one of claims 8 to 14.

20. A storage medium having instructions stored thereon that, when executed on a communication device, cause the communication device to perform the data frame transmission method according to any one of claims 1 to 7, or to perform the data frame transmission method according to any one of claims 8 to 14.
